# EUROPEAN PATENT SPECIFICATION

(11) **EP 2 607 878 B1**
(45) Date of publication and mention of the grant of the patent: **20.02.2019**
(21) Application number: 12195899.5
(22) Date of filing: 06.12.2012
(51) Int. Cl.: G01M 3/00, G01M 3/28

(54) **System and Method for Testing Fluid Seals for Leaks**
System und Verfahren zur Überprüfung von Flüssigkeitsdichtungen auf Lecks
Système et procédé permettant de tester des fuites dans des joints d'étanchéité

(30) Priority: 08.12.2011 US 201113315118
(43) Date of publication of application: 26.06.2013
(73) Proprietor: Petrotechnologies, INC., Louisiana 70518 (US)
(72) Inventor: Levy, David, Broussard, LA Louisiana 70518 (US)
(74) Representative: Williams, Michael Ian

(56) References cited:
- EP-A1- 1 635 099

## Description

The present invention generally relates to a system and method for determining leaks in fluid seals, such as seal connectors, blow out preventer (BOP) seals and high pressure energizable tube connectors, such as for use in an oil well or natural gas well.

A need exists for a system and method to quickly evaluate fluid seals that is capable of providing results in less than about 5 minutes.

A further need exists for a system and method for ascertaining small leaks, such as leaks of less than 1 x 10⁻⁶cm³.

A further need exists for a system and method for ascertaining leaks that is highly reliable, easy to use, and requires little or no training.

A further need exists for a leak test system and method for small volumes that can test at high pressures, such as over 6.89 x 10⁷ N/m² (10,000 psi), without requiring cumbersome testing equipment and calibration techniques.

EP 1635099 discloses a method of monitoring the tightness of a partition, such as a wall, which is used for the passage of cables and pipes. Initially a cavity in the partition is subjected to a different pressure from the environment. Subsequently the pressure is measured over or after a predetermined time. A signal is generated when the pressure exceeds or falls below a predetermined target pressure value. By measuring the pressure in the cavity over or after a certain time and comparing it with a desired pressure value, it is possible to determine whether the partition is sufficiently tight.

According to a first aspect of the present invention there is provided a method for testing a device for a fluid leak, the method comprising:
a. connecting the device to a pump connected to a reservoir of fluid, wherein the device has a fluid seal;
b. connecting a control device to the pump;
c. simultaneously pumping the fluid into the device and the control device;
d. detecting a pressure of the fluid flowing to the control device, forming a control response;
e. detecting a pressure of the fluid flowing to the device, forming a test response;
f. determining a difference between the test response and the control response, forming a pressure difference;
g. adjusting a volume of the fluid in the control device by a known volume;
h. determining a drop in the pressure difference associated with the known volume;
i. forming a leak test ratio by dividing the known volume by the drop in the pressure difference; and
j. determining if the test response imitates the control response by determining if a change in the pressure difference occurs, wherein:
   (i) if imitation is determined, providing a determination that no leak in the fluid seal of the device is present; or
   (ii) if imitation is not determined, determining a leak volume by multiplying a pressure drop associated with the change in the pressure difference by the leak test ratio, and providing a determination that a leak in the fluid seal of the device is present.

The method may further comprise determining a time period associated with the leak volume and dividing the leak volume by the time period, forming a leak rate.

The volume of the fluid in the control device may be adjusted using a stem of a valve, the valve may be in fluid communication between the pump and the control device, and the stem may be configured to be rotated to provide the known volume.

The method may further comprising detecting the pressures using pressure transducers, wherein the pressure transducers are in communication with a processor, wherein the processor is in communication with a data storage, and wherein the data storage has computer instructions for storing the detected pressures.

The method may further comprise using computer instructions in the data storage to:
a. form the test response and the control response;
b. form the pressure difference;
c. determine the drop in the pressure difference associated with the known volume;
d. form the leak test ratio;
e. determine if the test response imitates the control response;
f. provide the determination that no leak in the fluid seal of the device is present, or determining the leak volume and provide the determination that the leak in the fluid seal of the device is present;
g. store information about the fluid in the data storage;
h. store a value for the known volume in the data storage; and
i. store a value representing the known volume in the data storage.
The method may further comprise forming a plot of the pressure difference over time.

The method may further comprise:
a. using a means for communication to transfer the plot of the pressure difference over time to a user, wherein the means for communication is in communication with the processor, the data storage, or combinations thereof;
b. presenting the plot of the pressure difference over time as an executive dashboard to the user on a client device, a display, or combinations thereof; or
c. combinations thereof.

In some embodiments:
a. the fluid is a member of the group consisting of: water, compressed air, oil, compressed nitrogen, compressed helium, another compressed inert gas, another gas, another fluid, and combinations thereof;
b. the fluid is at a pressure ranging from 14 psi to 40,000 psi;
c. the fluid is pumped to the device and the control device at a pressure ranging from 5000 psi to 20,000 psi or
d. combinations thereof.

The method may further comprise providing identical pressures to the device and the control device using the fluid. The device may be a blowout preventer, a connector, or a plurality of connectors for a well. The fluid leak may have a rate of less than 1 x 10 -6 cm3 per minute. The known volume may range from 1 x 10-6 gallons to 1 barrel. The method may further comprise stacking or connecting multiple devices together and simultaneously fluid seals of the multiple devices.

According to another aspect of the invention there is provided a system for testing a device for a fluid leak, the system comprising:
a. a pump connected to a reservoir of fluid, wherein the pump is configured to be connected to a device having a fluid seal;
b. a control device in fluid communication with the pump, wherein the pump is configured to simultaneously pump the fluid into the device and the control device;
c. a first pressure transducer disposed between the pump and the control device for detecting a pressure of the fluid in the control device to form a control response;
d. a second pressure transducer disposed between the pump and the device for detecting a pressure of the fluid in the device form a test response;
e. a processor and a data storage in communication with the first pressure transducer and the second pressure transducer, wherein the processor is configured to receive the a control response and the test response for storage in the data storage;
f. computer instructions in the data storage to instruct the processor to determine a difference between the test response and the control response to form a pressure difference;
g. a valve in fluid communication between the pump and the control device, wherein the valve comprises a stem configured to adjust a volume of the fluid in the control device by a known volume;
h. computer instructions in the data storage to instruct the processor to determine a drop in the pressure difference associated with the known volume;
i. computer instructions in the data storage to instruct the processor to form a leak test ratio by dividing the known volume by the drop in the pressure difference; and
j. computer instructions in the data storage to instruct the processor to determine if the test response imitates the control response by determining if a change in the pressure difference occurs, wherein:
   (i) if imitation is determined, the processor is configured to use computer instructions in the data storage to provide a determination that no leak in the fluid seal of the device is present; or
   (ii) if imitation is not determined, the processor is configured to use computer instructions in the data storage to determine a leak volume by multiplying a pressure drop associated with the change in the pressure difference by the leak test ratio, and to provide a determination that a leak in the fluid seal of the device is present.

The system may further comprise computer instructions in the data storage to instruct the processor to determine a time period associated with the leak volume and dividing the leak volume by the time period to form a leak rate.

The system may further comprise in the data storage:
a. information about the fluid;
b. a value for the known volume; and
c. a value representing the known volume.

The system may further comprise computer instructions in the data storage to instruct the processor to form a plot of the pressure difference over time.

The system may further comprise:
a. a means for communication in communication with the processor and the data storage for transferring the plot of the pressure difference over time to a user;
b. computer instructions in the data storage to instruct the processor to present the plot of the pressure difference over time as an executive dashboard to the user on a client device, a display, or combinations thereof; or
c. combinations thereof.

In some embodiments:
a. the fluid is a member of the group consisting of: water, compressed air, oil, compressed nitrogen, compressed helium, another compressed inert gas, another gas, another fluid, and combinations thereof;
b. the fluid is at a pressure ranging from 14 psi to 40,000 psi; or
c. combinations thereof.

The device may be a blowout preventer, a connector, a plurality of connectors, or multiple devices stacked or connected for a well.

### BRIEF DESCRIPTION OF THE DRAWINGS

The detailed description will be better understood in conjunction with the accompanying drawings as follows:
Figure 1 depicts an embodiment of a system that can be used to implement the method.
Figure 2 depicts an embodiment of the data storage having a plurality of computer instructions stored therein.
Figure 3 depicts a raw pressure data plot, showing raw pressure data plotted over time, according to one or more embodiments.
Figure 4 depicts a plot of test response minus control response, according to one or more embodiments.
Figure 5 depicts an embodiment of the plot of test response minus control response with the change in pressure and a change in temperature plotted with respect to the change in time.
Figure 6 depicts a flow diagram of the method for testing the device for a fluid leak, according to one or more embodiments.

The present embodiments are detailed below with reference to the listed Figures.

### DETAILED DESCRIPTION OF THE EMBODIMENTS

Before explaining the present system and method in detail, it is to be understood that the system and method is not limited to the particular embodiments and that they can be practiced or carried out in various ways.

The present embodiments relate to a system and method for testing fluid seals, such as those in connectors or blow out preventers, which can be used for oil wells, natural gas well, subsea wells, land based wells, or the like.

The system and method can help the American economy by reducing the time and expense required to begin producing hydrocarbons, thereby lowering the cost of gasoline and similar petrochemical products, and saving rig time, which can be about $50,000 an hour. The system and method can save as much as 30 minutes per analysis. Analysis of a rig can be performed about 10 times a month; therefore the system and method can be used to save about 5 hours a month in analysis time. As such, the system and method can be used to save about $250,000 a month in production costs and about $500,000 a month in production time, based on current projected costs.

The method can include using a pump to simultaneously pump a fluid from a reservoir to a control device and a device for testing the device.

The pump can be a small hand pump, an ENERPAC pump, or any pump capable of flowing from about 1 milliliter to about 10 milliliters of gas or fluid into a test conduit and adapted to reach a test pressure ranging from about 1000 psi to about 20000 psi.

The pump can be an electric pump, and the electric pump can be connected to a power supply, such as batteries, a 110 volt power supply, generator, or combinations thereof.

The device and the control device can be pressurized. In one or more embodiments, the device and the control device can have similar pressures, identical pressures, or different pressures.

The method can include using a computer program to permit a user to test at two different pressures, and then to adjust the pressures to provide a "normal", thereby allowing for correct and highly accurate comparisons.

The method to determine leak rates for a fluid in a device can include determining a control volume for fluid in the control device at an initial pressure.

In one or more embodiments, the method can be provide highly accurate comparisons for fluid leak rates as low as 1 x 10⁻⁶ cm³/minute or less.

The control volume can be expanded in the control device by allowing the control volume to increase in size by a known volume change, such that pressure changes from the initial pressure to an analysis pressure. The known volume change can range from only a few microliters to gallons.

The method can include inserting a valve in a flow line between the pump and the control device. The valve can have a stem that can be configured to be rotated to provide the known volume change. In operation, the expansion of the control volume can be achieved by turning the stem on the valve. For example, a quarter turn of the stem on the valve can correlate to a known volume change of 10⁻⁶ gallons.

The increase in volume can cause the pressure drop. An example of the change from initial pressure to analysis pressure for the control device can be 200 psi.

The method can include using a processor with a data storage which can have computer instructions stored therein. The data storage can be in communication with a pressure transducer on the device being tested and a pressure transducer on the control device.

Information on the fluid can be stored in the data storage. For example, the fluid can be water, oil, nitrogen, air, compressed air, compressed nitrogen, compressed helium, another compressed inert gas, another liquid, another gas, or combinations thereof. Also, the fluid can be at a pressure ranging from about 14 psi to about 40,000 psi.

Information on the test pressure can be stored in the data storage. For example, the test pressure can be 10,600 psi.

Information on the initial control pressure can be stored in the data storage. For example, the initial control pressure can be 10,325 psi.

Information on the analysis control pressure can be stored in the data storage. For example, the analysis control pressure can be 9,500 psi.

A value for the known volume change can be stored in the data storage. For example, the know volume change can range from about 1 milliliter to about 5 barrels.

Values representing the known volume change can be stored in the data storage. Values representing the known value change can vary depending upon the valve disposed between the pump and the control device, for example the value can range from about 1 x 10⁻⁶ gallons to about 1 barrel.

The method can include simultaneously pressurizing the control device and the device that is being tested with fluid. The control device and the device can be pressurized at substantially similar initial pressures, such as within a deviation of +/- 5 percent.

During pressurization, the fluid used to test the device can be substantially similar to, identical to, or different from the fluid used to apply pressure to the control device.

The method can include using computer instructions in the data storage to calculate a leak calculation ratio by: using the known volume change for the fluid in the control device, and dividing the known volume change by a difference between the initial pressure and the analysis pressure.

The method can include providing a determination that no leak is present in the fluid seal of the device being tested when the pressure of the device imitates the control pressure. For example, testing equipment can provide the determination that no leak is present.

The method can include calculating the difference between the pressure in the control device and the pressure in the device being tested over a defined period of time to form a calibration set point.

The method can include continually calculating the difference between the pressure in the control device and the pressure in the device being tested, and comparing the calculated difference to the calibration set point.

If the pressure of the device being tested does not imitate the pressure of the control device, then computer instructions in the data storage can be used to calculate the difference to form the calibration set point.

If the difference between the test response and the control response changes, then a leak volume can be calculated using the leak calculation ratio.

For example, if the control device is determined to be at 10,200 psi and the device being tested is determined to be at 10,000 psi, the initial difference will be 200 psi, which forms the calibration set point.

The method can include comparing the calculated initial difference over time. The method can include determining that a leak is present when the calculated difference deviates from the calibration set point. Computer instructions in the data storage can be used to compare the calculated difference over time and determine that there is a leak present.

The method can include multiplying the calculated calibration set point difference times the leak calculation ratio to determine a leak volume, such as by using computer instructions stored in the data storage.

The method can include dividing the leak volume by the defined period of time to provide a leak rate of the device being tested, such as by using computer instructions stored in the data storage.

In one or more embodiments, the method can include using a means for communicating with the data storage, such as a cell phone, laptop, or computer monitor. The means for communicating can link to computer instructions in the data storage for comparing the pressure of the device being tested to the pressure of the control device.

The control device can be tested using the fluid with a first test pressure ranging from about 5000 psi to about 20,000 psi, while simultaneously testing the device with the fluid at a test pressure ranging from about 5000 psi to about 20,000 psi.

A pressure of the control device can also be referred to as a control response, and a pressure of the device being tested, also referred to as a test response, can be simultaneously obtained. The pressure transducer on the control device can be used to measure and record the control response to the data storage, and the pressure transducer on the device being tested can be used to measure and record the test response to the data storage.

The test response and the control response can be compared, forming compared results which can be presented immediately from the time that the fluid is pumped to the control device and the device being tested.

The computer instructions in the data storage can form compared results, and can present the compared results to a user on the means for communicating. Also, the means for communicating can form the compared results. In one or more embodiments, the compared results can be formed immediately from the time of pumping the fluid to the device being tested and the control device.

The compared results can be presented to the user on a client device. The compared results can be transmitted to a network by the means for communicating, which can be in communication with the client device.

The client device can be a cell phone, laptop, desktop computer, personal digital assistant, global positioning system with a display and the processor, or similar device with the processor that can be connected to the network.

The network can be a cellular network, satellite network, local area network, global positioning system network, or the internet.

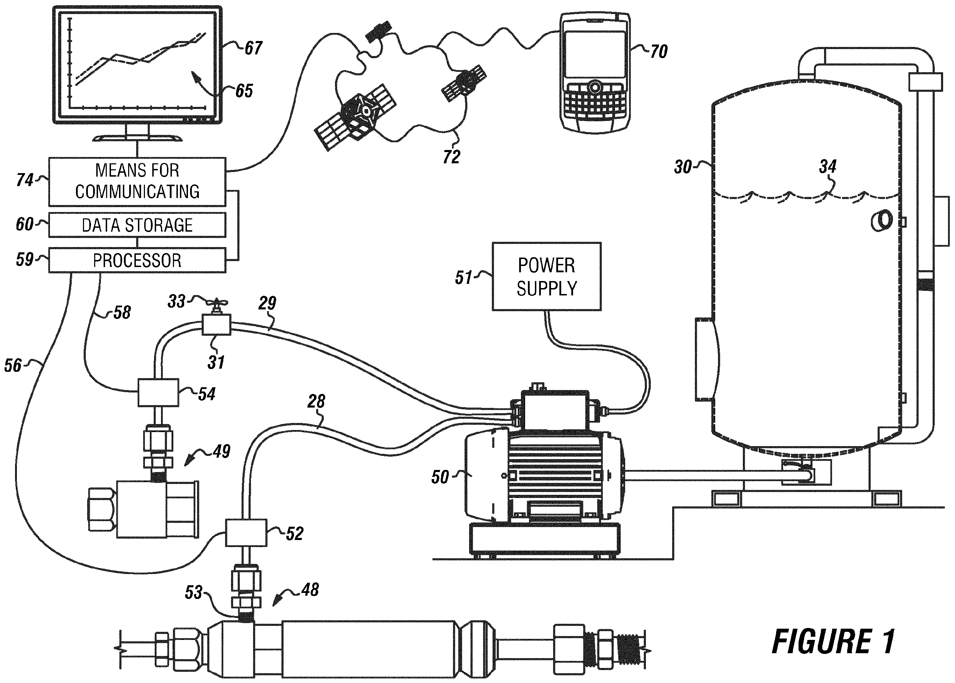

Turning now to the Figures, Figure 1 depicts a system that can be used to implement the method according to one or more embodiments.

The system can include a fluid 34 contained in a reservoir 30 or a secondary source.

The system can include a pump 50 that can be used to simultaneously pump the fluid 34 from the reservoir 30 to a device 48 being tested which can have a fluid seal, while pumping the fluid 34 from the reservoir 30 to a control device 49. The fluid 34 can be pumped at the same or similar pressures through flow lines, such as a test conduit 28 and a control conduit 29.

The pump 50 can be powered by a power supply 51, such as batteries, a 110 volt supply from a generator, or an additional power supply.

The system can include a valve 31 with an integral valve stem 33 that can be installed in the control conduit 29. For example, the valve 31 can be a 1/4 inch high pressure stem valve, such as those available from Autoclave Engineers of Pennsylvania. The integral valve stem 33 can be configured to be rotated to provide known volume changes of the fluid 34 to the control device 49.

The pump 50 can pump the fluid 34 into the device 48 through a port 53. The pump 50 can pressure the device 48 to up to about 20,000 psi. In one or more embodiments, the device 48 can be a connector, blow out preventer or other device with a fluid seal.

The system can include a test pressure transducer 52 and control pressure transducer 54. The fluid 34 can pass through the test pressure transducer 52 in the test conduit 28 before passing into the device 48 and through the control pressure transducer 54 in the control conduit 29 before passing into the control device 49.

The test pressure transducer 52 can detect pressures in the test conduit 28, forming a test pressure signal 56. The test pressure transducer 52 can transmit the test pressure signal 56 to a processor 59 in communication with the test pressure transducer 52.

The control pressure transducer 54 can detect pressures in the control conduit 29, forming a control signal 58. The control pressure transducer 54 can transmit the control signal 58 to the processor 59 in communication with the control pressure transducer 54.

The processor 59 can be configured to receive the test pressure signal 56 and control signal 58 for storage in a data storage 60.

The processor 59 can store the test pressure signal 56 and the control signal 58 in the data storage 60.

The data storage 60 and the processor 59 can be in communication with a means for communicating 74, which can be in communication with a network 72 for communicating with a client device 70 for remote monitoring.

The means for communicating 74 can also be in communication with a display 67, which can depict an executive dashboard 65 of the testing results for local monitoring. In one or more embodiments, the executive dashboard 65 can also be presented on the client device 70.

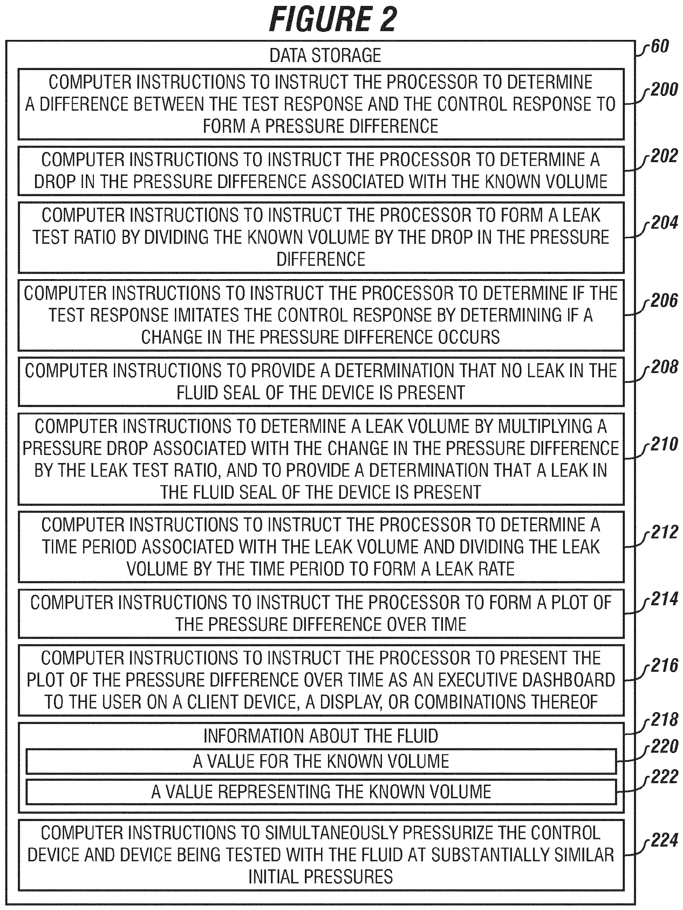

Figure 2 depicts an embodiment of the data storage 60 having a plurality of computer instructions stored therein.

The data storage 60 can include computer instructions to instruct the processor to determine a difference between the test response and the control response to form a pressure difference 200.

The data storage 60 can include computer instructions to instruct the processor to determine a drop in the pressure difference associated with the known volume 202.

The data storage 60 can include computer instructions to instruct the processor to form a leak test ratio by dividing the known volume by the drop in the pressure difference 204.

The data storage 60 can include computer instructions to instruct the processor to determine if the test response imitates the control response by determining if a change in the pressure difference occurs 206.

In operation, if imitation is determined, the processor can be configured to use computer instructions to provide a determination that no leak in the fluid seal of the device is present 208.

In operation, if imitation is not determined, the processor can be configured to use computer instructions to determine a leak volume by multiplying a pressure drop associated with the change in the pressure difference by the leak test ratio, and to provide a determination that a leak in the fluid seal of the device is present 210.

The data storage 60 can include computer instructions to instruct the processor to determine a time period associated with the leak volume and dividing the leak volume by the time period to form a leak rate 212.

The data storage 60 can include computer instructions to instruct the processor to form a plot of the pressure difference over time 214.

The data storage 60 can include computer instructions to instruct the processor to present the plot of the pressure difference over time as the executive dashboard to the user on the client device, the display, or combinations thereof 216.

The data storage 60 can include information about the fluid 218, a value for the known volume 220, and a value representing the known volume 222 stored therein.

The data storage 60 can include computer instructions to simultaneously pressurize the control device and device being tested with the fluid at substantially similar initial pressures 224.

For example, the initial pressures can be within a deviation of about +/- 5 percent. During simultaneously pressurization, the fluid used to pressurize the device being tested and the fluid used to pressurize the control device can be identical, substantially similar, or different.

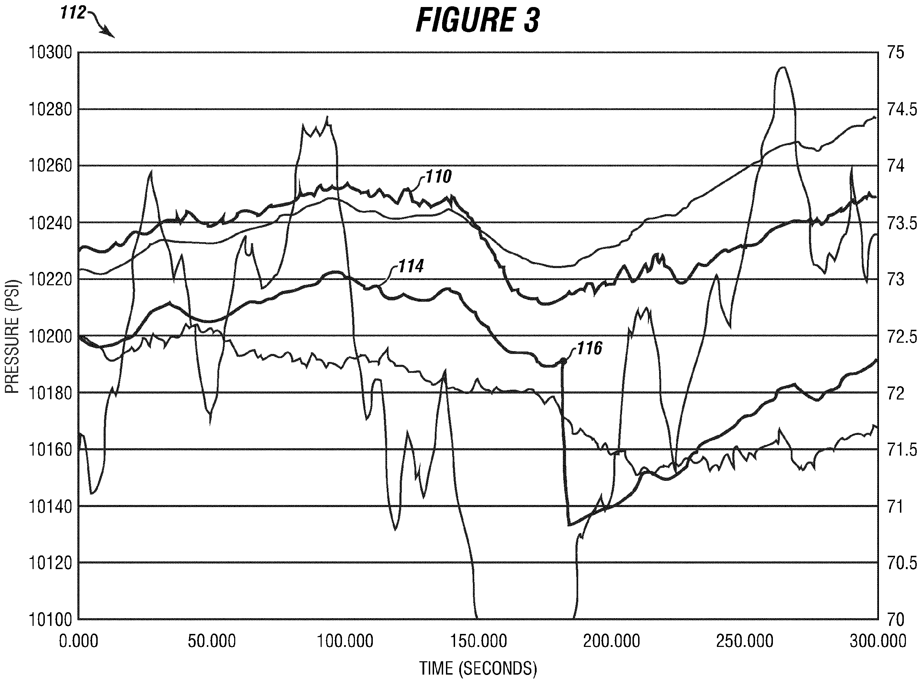

Figure 3 depicts a raw pressure data plot 112, showing raw pressure data plotted over time, according to one or more embodiments.

The raw pressure data plot 112 can include a plot of detected pressure of the device being tested as a test line 110.

The raw pressure data plot 112 can include a plot of detected pressure of the control device as a control line 114.

The control line 114 can have a pressure reduction at about halfway through a pressure test at a point 116, which can be due to a volume increase. The volume increase can be initiated by a ¼ inch turn on the stem of the valve in the control conduit. The diameter of the stem on the valve and the pitch of the thread connecting the stem to the valve can be known; therefore the volume increase can be calculated using computer instructions in the data storage.

The test line 110 can be depicted imitating the control line 114, which can indicate that there is no leak in the device being tested.

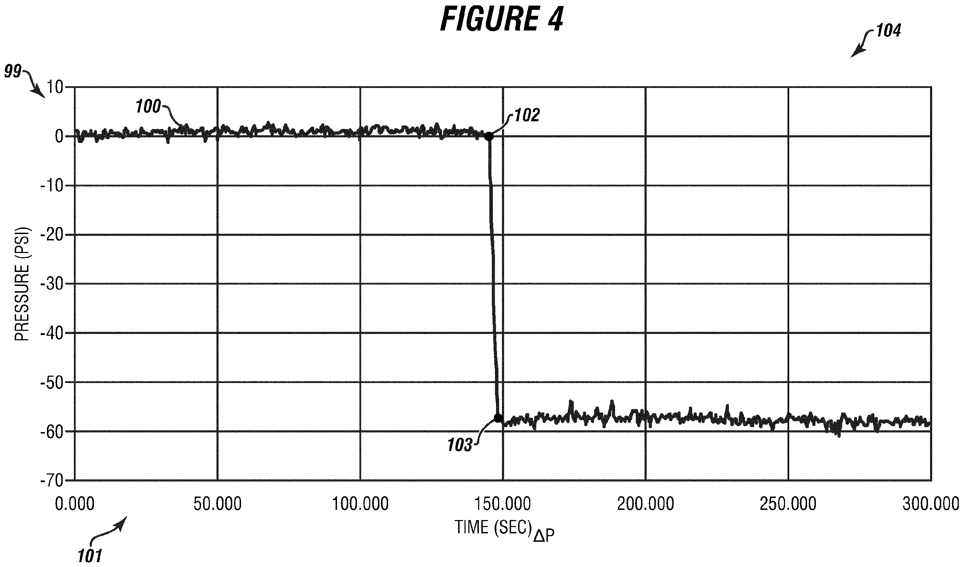

Figure 4 depicts a plot of test response minus control response 104, according to one or more embodiments.

The plot of test response minus control response 104 can include a change in pressure 99 and a change in time 101. The change in pressure 99 can be plotted with respect to the change in time 101.

A first portion of the curve 100 represents a start of the test for fluid leaks, with the initial pressure of both being the same and remaining substantially the same until a midpoint of the curve 102, which can be about halfway through the test for fluid leaks. A 1/4 inch turn of the stem of the valve in the control conduit can initiate the pressure difference depicted at the midpoint of the curve 102.

Turning the stem of the valve can open the valve and cause the fluid to flow through the valve, thereby increasing the volume of fluid in the control device. The difference in the volume of fluid before and after turning the stem of the valve can be referred to as a control volume.

The control volume can be calculated based on the valve stem diameter and valve stem thread pitch. For example, the control volume can be 1 x 10⁻⁶ gallons, which can result in a pressure difference of 60 psi, which is indicated at a pressure drop point of the curve 103.

In one or more embodiments, the plot of test response minus control response 104 can be formed using computer instructions stored in the data storage.

The plot of test response minus control response 104 can make evident whether or not there is a fluid leak in the fluid seal of the device being tested.

The plot of test response minus control response 104 is depicted with no leak present, which is evident due to the lack of a change in pressure difference except for at the midpoint of the curve 102 where a 1/4 inch turn of the stem of the valve in the control conduit was initiated.

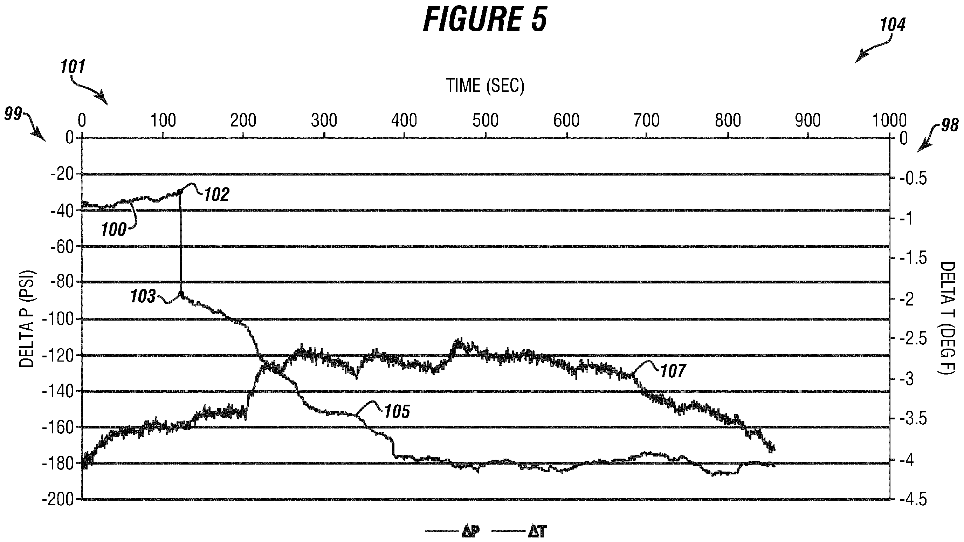

Figure 5 depicts an embodiment of the plot of test response minus control response 104 with the change in pressure 99 and a change in temperature 98 plotted with respect to the change in time 101.

The first portion of the curve 100 represents a start of the test for fluid leaks, with the initial pressure of both remaining substantially the same until the midpoint of the curve 102, at which a 1/4 inch turn of the stem of the valve in the control conduit has been initiated to cause the depicted pressure difference.

Turning the stem of the valve in the control conduit can cause the change in pressure to drop to the pressure drop point of the curve 103.

After the pressure drop point of the curve 103, the change in pressure 99 can be shown dropping slowly over the change in time 101, as indicated by a leak portion of the curve 105, which is indicative of a fluid leak in the fluid seal of the device being tested.

In operation, the known volume change can be introduced halfway through the test, allowing a leak rate to be defined.

The leak rate can be calculated using the change in volume and the change in time in which the change in volume occurred can be determined, such as by using computer instructions in the data storage. For example, a 1 x 10⁻⁶ gallon reduction in volume over five minutes can be equated with a leak rate of 0.00029 gallons per day.

In the depicted embodiment, a 1/4 inch turn of the stem of the valve was initiated at about 150 seconds into the test, and he fluid leaking stopped at about 400 seconds into the test. The leak volume can be estimated. For example, if 60 psi is a known leak volume of 1 x 10⁻⁶ gallons, and the actual leak volume is 90 psi over about 250 second, it can be estimated that the leak rate is about 0.00045 gallons per day.

Environmental effects, such as weather, O-ring extrusion, and the like can be cancelled out because the difference between the test response and the control response is measured. Also, the control device can be visually inspected for fluid leaks to ensure accurate test results. As such, deviations on the plot of test response minus control response 104 can be determined to be due to leaks, unless the control device is not in under the same environmental conditions as the device being tested.

A temperature line 107 for the change in temperature 98 can be plotted along with the change in pressure 99. In operation, if the change in temperature 98 rises and the change in pressure 99 rises, this can be indicative that the device being tested is being heated relative to the control device. If the change in temperature 98 rises and the change in pressure 99 drops, this can be indicative of a fluid leak in the device being tested.

In operation, multiple devices can be stacked or connected together, such that multiple fluid seals can be tested simultaneously. For example, a 3/8 inch and two 1/4 inch connections can be tested by screwing together the connectors.

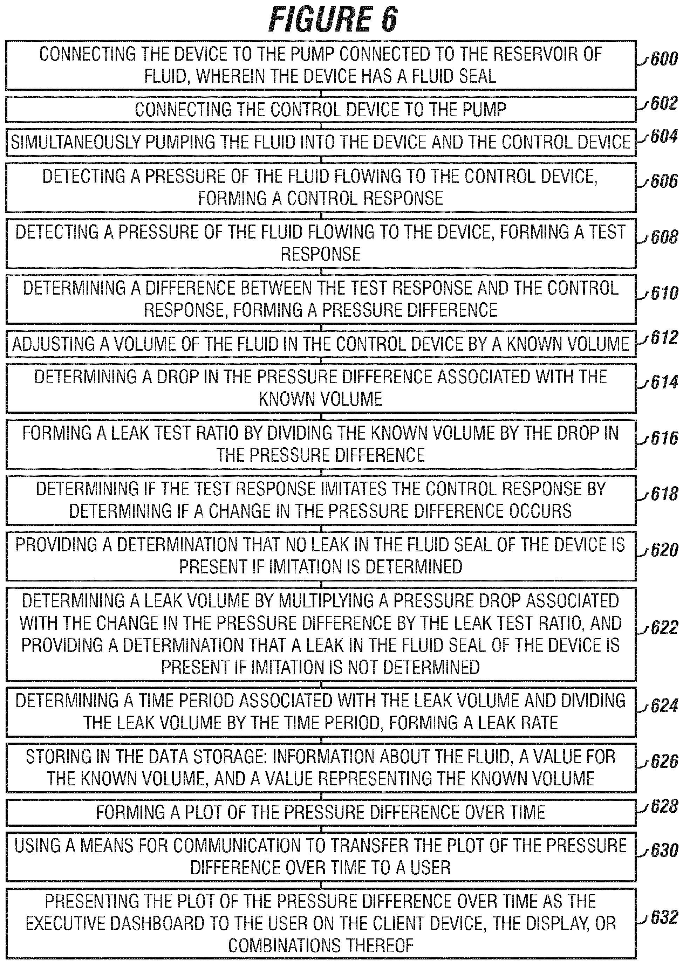

Figure 6 depicts a flow diagram of the method for testing the device for a fluid leak, according to one or more embodiments. The fluid leak can have a rate of less than 1 x 10⁻⁶ cm³ per minute.

The method can include connecting the device to the pump connected to the reservoir of fluid, wherein the device has a fluid seal, as illustrated by box 600.

The device can be a blowout preventer, a connector, a plurality of connectors, or multiple devices stacked or connected together for a well. Multiple devices can be simultaneously tested.

For example, the fluid can be: water, compressed air, oil, compressed nitrogen, compressed helium, another compressed inert gas, another gas, another fluid, and combinations thereof. The fluid can be at a pressure ranging from 14 psi to 40,000 psi.

The method can include connecting the control device to the pump, as illustrated by box 602.

The method can include simultaneously pumping the fluid into the device and the control device, as illustrated by box 604.

The fluid can be pumped to the device and the control device at a pressure ranging from 5000 psi to 20,000 psi. In operation, identical pressures can be provided to the device and the control device using the fluid.

The method can include detecting a pressure of the fluid flowing to the control device, forming a control response, as illustrated by box 606.

The method can include detecting a pressure of the fluid flowing to the device, forming a test response, as illustrated by box 608.

For example, the pressures can be detected using pressure transducers in communication with the processor, the processor can be in communication with the data storage, and the data storage can have computer instructions for storing the detected pressures.

For example, computer instructions in the data storage can be used to form the test response and the control response.

The method can include determining a difference between the test response and the control response, forming a pressure difference, as illustrated by box 610.

For example, computer instructions in the data storage can be used to form the pressure difference.

The method can include adjusting a volume of the fluid in the control device by a known volume, as illustrated by box 612.

For example, the volume of the fluid in the control device can be adjusted using a stem of the valve. The valve can be in fluid communication between the pump and the control device, and the stem can be configured to be rotated to provide the known volume. The known volume can range from about 1 x 10⁻⁶ gallons to about 1 barrel.

The method can include determining a drop in the pressure difference associated with the known volume, as illustrated by box 614.

For example, computer instructions in the data storage can be used to determine the drop in the pressure difference associated with the known volume.

The method can include forming a leak test ratio by dividing the known volume by the drop in the pressure difference, as illustrated by box 616.

For example, computer instructions in the data storage can be used to form the leak test ratio.

The method can include determining if the test response imitates the control response by determining if a change in the pressure difference occurs, as illustrated by box 618.

For example, computer instructions in the data storage can be used to determine if the test response imitates the control response.

The method can include providing a determination that no leak in the fluid seal of the device is present if imitation is determined, as illustrated by box 620.

The method can include determining a leak volume by multiplying a pressure drop associated with the change in the pressure difference by the leak test ratio, and providing a determination that a leak in the fluid seal of the device is present if imitation is not determined, as illustrated by box 622.

For example, computer instructions in the data storage can be used to provide the determination that no leak in the fluid seal of the device is present, or determine the leak volume and provide the determination that the leak in the fluid seal of the device is present.

The method can include determining a time period associated with the leak volume and dividing the leak volume by the time period, forming a leak rate, as illustrated by box 624.

The method can include storing in the data storage: information about the fluid, a value for the known volume, and a value representing the known volume, as illustrated by box 626.

For example, the value representing the known volume can be a degree of turn associated with a known volume.

The method can include forming a plot of the pressure difference over time, as illustrated by box 628.

The method can include using a means for communication to transfer the plot of the pressure difference over time to a user, as illustrated by box 630.

For example, the means for communication can be in communication with the processor, the data storage, or combinations thereof.

The method can include presenting the plot of the pressure difference over time as the executive dashboard to the user on the client device, the display, or combinations thereof, as illustrated by box 632.

For example, the client device and the display can each be: a cell phone, a laptop, a desktop computer, a personal digital assistant, a global positioning system, or similar device that is connectable to the network.

## Claims

1. A method for testing a device for a fluid leak, the method comprising:
a. connecting the device (48) to a pump (50) connected to a reservoir (30) of fluid (34), wherein the device has a fluid seal;
b. connecting a control device (49) to the pump;
c. simultaneously pumping the fluid into the device (48) and the control device (49);
d. detecting a pressure of the fluid flowing to the control device (49), forming a control response;
e. detecting a pressure of the fluid flowing to the device (48), forming a test response;
f. determining a difference between the test response and the control response, forming a pressure difference, **characterised in that**, that the method is additionally comprising steps of;
g. adjusting a volume of the fluid in the control device (49) by a known volume;
h. determining a drop in the pressure difference associated with the known volume;
i. forming a leak test ratio by dividing the known volume by the drop in the pressure difference; and
j. determining if the test response imitates the control response by determining if a change in the pressure difference occurs, wherein:
(i) if imitation is determined, providing a determination that no leak in the fluid seal of the device (48) is present; or
(ii) if imitation is not determined, determining a leak volume by multiplying a pressure drop associated with the change in the pressure difference by the leak test ratio, and providing a determination that a leak in the fluid seal of the device (48) is present.

2. The method of claim 1, further comprising determining a time period associated with the leak volume and dividing the leak volume by the time period, forming a leak rate.

3. The method of claim 1 or 2, wherein the volume of the fluid in the control device (49) is adjusted using a stem (33) of a valve (31), wherein the valve is in fluid communication between the pump (50) and the control device, and wherein the stem is configured to be rotated to provide the known volume.

4. The method of any of the preceding claims, further comprising detecting the pressures using pressure transducers (52, 54), wherein the pressure transducers are in communication with a processor (59), wherein the processor is in communication with a data storage (60), and wherein the data storage has computer instructions for storing the detected pressures.

5. The method of claim 4, further comprising using computer instructions in the data storage (60) to:
a. form the test response and the control response;
b. form the pressure difference;
c. determine the drop in the pressure difference associated with the known volume;
d. form the leak test ratio;
e. determine if the test response imitates the control response;
f. provide the determination that no leak in the fluid seal of the device (48) is present, or determining the leak volume and provide the determination that the leak in the fluid seal of the device is present;
g. store information about the fluid in the data storage (60);
h. store a value for the known volume in the data storage (60); and
i. store a value representing the known volume in the data storage (60).

6. The method of any of the preceding claims, further comprising forming a plot of the pressure difference over time.

7. The method of claim 6, further comprising:
a. using a means (74) for communication to transfer the plot of the pressure difference over time to a user, wherein the means for communication is in communication with the processor (59), the data storage (60), or combinations thereof;
b. presenting the plot of the pressure difference over time as an executive dashboard to the user on a client device (70), a display (67), or combinations thereof; or
c. combinations thereof.

8. The method of any of the preceding claims, wherein:
a. the fluid (34) is a member of the group consisting of: water, compressed air, oil, compressed nitrogen, compressed helium, another compressed inert gas, another gas, another fluid, and combinations thereof;
b. the fluid is at a pressure ranging from 96530 N/m² (14 psi) to 2.758 x 10⁸ N/m² (40,000 psi);
c. the fluid is pumped to the device (48) and the control device (49) at a pressure ranging from 3.448 x 10⁷ N/m² (5000 psi) to 1.379 x 10⁸ N/m² (20,000 psi) or
d. combinations thereof.

9. The method of any of the preceding claims, further comprising providing identical pressures to the device (48) and the control device (49) using the fluid.

10. The method of any of the preceding claims, wherein the device (48) is a blowout preventer, a connector, or a plurality of connectors for a well.

11. The method of any of the preceding claims, wherein the fluid leak has a rate of less than 1 x 10⁻⁶ cm³ per minute.

12. The method of any of the preceding claims, wherein the known volume ranges from 3.786 x 10⁻⁶ l (1 x 10⁻⁶ gallons) to 159 1 (1 barrel).

13. The method of any of the preceding claims, further comprising stacking or connecting multiple devices together and simultaneously fluid seals of the multiple devices.

14. A system for testing a device for a fluid leak, the system comprising:
a. a pump (50) connected to a reservoir (30) of fluid (34), wherein the pump is configured to be connected to a device (48) having a fluid seal;
b. a control device (49) in fluid communication with the pump, wherein the pump is configured to simultaneously pump the fluid into the device (48) and the control device (49);
c. a first pressure transducer (54) disposed between the pump (50) and the control device (49) for detecting a pressure of the fluid in the control device to form a control response;
d. a second pressure transducer (52) disposed between the pump (50) and the device (48) for detecting a pressure of the fluid in the device to form a test response;
e. a processor (59) and a data storage (60) in communication with the first pressure transducer (54) and the second pressure transducer (52), wherein the processor is configured to receive the control response and the test response for storage in the data storage;
f. computer instructions in the data storage (60) to instruct the processor (59) to determine a difference between the test response and the control response to form a pressure difference;
g. a valve (31) in fluid communication between the pump (50) and the control device (49), **characterized in that**, the valve comprises a stem (33) configured to adjust a volume of the fluid in the control device by a known volume; and **in that** the system further comprises
h. computer instructions in the data storage (60) to instruct the processor (59) to determine a drop in the pressure difference associated with the known volume;
i. computer instructions in the data storage (60) to instruct the processor (59) to form a leak test ratio by dividing the known volume by the drop in the pressure difference; and
j. computer instructions in the data storage (60) to instruct the processor (59) to determine if the test response imitates the control response by determining if a change in the pressure difference occurs, wherein:
(i) if imitation is determined, the processor (59) is configured to use computer instructions in the data storage (60) to provide a determination that no leak in the fluid seal of the device (48) is present; or
(ii) if imitation is not determined, the processor (59) is configured to use computer instructions in the data storage (60) to determine a leak volume by multiplying a pressure drop associated with the change in the pressure difference by the leak test ratio, and to provide a determination that a leak in the fluid seal of the device (48) is present.

15. The system of claim 14, further comprising computer instructions in the data storage (60) to instruct the processor (59) to determine a time period associated with the leak volume and dividing the leak volume by the time period to form a leak rate.

## Patentansprüche

1. Verfahren zum Prüfen einer Vorrichtung auf ein Fluidleck, wobei das Verfahren Folgendes umfasst:
a. Verbinden der Vorrichtung (48) mit einer Pumpe (50), die mit einem Behälter (30) von Fluid (34) verbunden ist, wobei die Vorrichtung eine Fluiddichtung aufweist;
b. Verbinden einer Kontrollvorrichtung (49) mit der Pumpe;
c. gleichzeitiges Pumpen des Fluids in die Vorrichtung (48) und die Kontrollvorrichtung (49);
d. Erfassen eines Drucks des zu der Kontrollvorrichtung (49) fließenden Fluids, sodass eine Kontrollantwort gebildet wird;
e. Erfassen eines Drucks des zu der Vorrichtung (48) fließenden Fluids, sodass eine Prüfantwort gebildet wird;
f. Bestimmen einer Differenz zwischen der Prüfantwort und der Kontrollantwort, sodass eine Druckdifferenz gebildet wird, **dadurch gekennzeichnet, dass** das Verfahren zusätzlich folgende Schritte umfasst:
g. Anpassen eines Volumens des Fluids in der Kontrollvorrichtung (49) um ein bekanntes Volumen;
h. Bestimmen eines mit dem bekannten Volumen assoziierten Abfalls der Druckdifferenz;
i. Bilden eines Leckprüfungsquotienten durch Teilen des bekannten Volumens durch den Abfall der Druckdifferenz; und
j. Feststellen, ob die Prüfantwort die Kontrollantwort nachahmt, durch Feststellen, ob eine Änderung der Druckdifferenz auftritt, wobei:
(i) wenn eine Nachahmung festgestellt wird, Bereitstellen einer Feststellung, dass kein Leck in der Fluiddichtung der Vorrichtung (48) vorliegt; oder
(ii) wenn keine Nachahmung festgestellt wird, Bestimmen eines Leckvolumens durch Multiplizieren eines mit der Änderung der Druckdifferenz assoziierten Druckabfalls mit dem Leckprüfungsquotienten und Bereitstellen einer Feststellung, dass ein Leck in der Fluiddichtung der Vorrichtung (48) vorliegt.

2. Verfahren nach Anspruch 1, weiter umfassend das Bestimmen einer mit dem Leckvolumen assoziierten Zeitperiode und Teilen des Leckvolumens durch die Zeitperiode, sodass eine Leckrate gebildet wird.

3. Verfahren nach Anspruch 1 oder 2, wobei das Volumen des Fluids in der Kontrollvorrichtung (49) unter Verwendung eines Schafts (33) eines Ventils (31) angepasst wird, wobei sich das Ventil in Fluidverbindung zwischen der Pumpe (50) und der Kontrollvorrichtung befindet, und wobei der Schaft dazu konfiguriert ist, gedreht zu werden, um das bekannte Volumen bereitzustellen.

4. Verfahren nach einem der vorangehenden Ansprüche, weiter umfassend das Erfassen der Drücke unter Verwendung von Druckwandlern (52, 54), wobei die Druckwandler mit einem Prozessor (59) in Verbindung stehen, wobei der Prozessor mit einem Datenspeicher (60) in Verbindung steht und wobei der Datenspeicher Computeranweisungen zum Speichern der erfassten Drücke aufweist.

5. Verfahren nach Anspruch 4, weiter umfassend das Verwenden von Computeranweisungen in dem Datenspeicher (60), um:
a. die Prüfantwort und die Kontrollantwort zu bilden;
b. die Druckdifferenz zu bilden;
c. den mit dem bekannten Volumen assoziierten Abfall der Druckdifferenz zu bestimmen;
d. den Leckprüfungsquotienten zu bilden;
e. festzustellen, ob die Prüfantwort die Kontrollantwort nachahmt;
f. die Feststellung bereitzustellen, dass kein Leck in der Fluiddichtung der Vorrichtung (48) vorliegt, oder das Leckvolumen zu bestimmen und die Feststellung bereitzustellen, dass das Leck in der Fluiddichtung der Vorrichtung vorliegt;
g. Informationen über das Fluid in dem Datenspeicher (60) zu speichern;
h. einen Wert für das bekannte Volumen in dem Datenspeicher (60) zu speichern; und
i. einen das bekannte Volumen angebenden Wert in dem Datenspeicher (60) zu speichern.

6. Verfahren nach einem der vorangehenden Ansprüche, weiter umfassend das Bilden eines Diagramms der Druckdifferenz über der Zeit.

7. Verfahren nach Anspruch 6, das weiter Folgendes umfasst:
a. Verwenden eines Mittels (74) zur Kommunikation, um das Diagramm der Druckdifferenz über der Zeit an einen Benutzer zu übertragen, wobei das Mittel zur Kommunikation mit dem Prozessor (59), dem Datenspeicher (60) oder Kombinationen davon in Verbindung steht;
b. Darstellen des Diagramms der Druckdifferenz über der Zeit als Executive Dashboard für den Benutzer auf einer Client-Vorrichtung (70), einer Anzeigevorrichtung (67) oder Kombinationen davon; oder
c. Kombinationen davon.

8. Verfahren nach einem der vorangehenden Ansprüche, wobei:
a. es sich bei dem Fluid (34) um ein Element der Gruppe handelt, die aus Wasser, Druckluft, Öl, komprimiertem Stickstoff, komprimiertem Helium, einem anderen komprimierten Inertgas, einem anderen Gas, einem anderen Fluid und Kombinationen davon besteht;
b. das Fluid unter einem Druck im Bereich von 96 530 N/m² (14 psi) bis 2,758 x 10⁸ N/m² (40 000 psi) steht;
c. das Fluid unter einem Druck im Bereich von 3,448 x 10⁷ N/m² (5000 psi) bis 1,379 x 10⁸ N/m² (20 000 psi) zu der Vorrichtung (48) und der Kontrollvorrichtung (49) gepumpt wird, oder
d. Kombinationen davon.

9. Verfahren nach einem der vorangehenden Ansprüche, weiter umfassend das Bereitstellen identischer Drücke für die Vorrichtung (48) und die Kontrollvorrichtung (49) unter Verwendung des Fluids.

10. Verfahren nach einem der vorangehenden Ansprüche, wobei es sich bei der Vorrichtung (48) um eine Bohrlochsicherung, einen Verbinder oder eine Vielzahl von Verbindern für ein Bohrloch handelt.

11. Verfahren nach einem der vorangehenden Ansprüche, wobei das Fluidleck eine Rate von weniger als 1 x 10⁻⁶ cm³ pro Minute aufweist.

12. Verfahren nach einem der vorangehenden Ansprüche, wobei das bekannte Volumen im Bereich von 3,786 x 10⁻⁶ l (1 x 10⁻⁶ Gallonen) bis 159 l (1 Barrel) liegt.

13. Verfahren nach einem der vorangehenden Ansprüche, weiter umfassend das Stapeln oder Verbinden miteinander mehrerer Vorrichtungen und gleichzeitig Fluiddichtungen der mehreren Vorrichtungen.

14. System zum Prüfen einer Vorrichtung auf ein Fluidleck, wobei das System Folgendes umfasst:
a. eine Pumpe (50), die mit einem Behälter (30) von Fluid (34) verbunden ist, wobei die Pumpe dazu konfiguriert ist, mit einer eine Fluiddichtung aufweisenden Vorrichtung (48) verbunden zu werden;
b. eine Kontrollvorrichtung (49) in Fluidverbindung mit der Pumpe, wobei die Pumpe dazu konfiguriert ist, das Fluid gleichzeitig in die Vorrichtung (48) und die Kontrollvorrichtung (49) zu pumpen;
c. einen ersten Druckwandler (54), der zwischen der Pumpe (50) und der Kontrollvorrichtung (49) angeordnet ist, um einen Druck des Fluids in der Kontrollvorrichtung zu erfassen, um eine Kontrollantwort zu bilden;
d. einen zweiten Druckwandler (52), der zwischen der Pumpe (50) und der Vorrichtung (48) angeordnet ist, um einen Druck des Fluids in der Vorrichtung zu erfassen, um eine Prüfantwort zu bilden;
e. einen Prozessor (59) und einen Datenspeicher (60) in Verbindung mit dem ersten Druckwandler (54) und dem zweiten Druckwandler (52), wobei der Prozessor dazu konfiguriert ist, die Kontrollantwort und die Prüfantwort zum Speichern in dem Datenspeicher zu empfangen;
f. Computeranweisungen in dem Datenspeicher (60) zum Anweisen des Prozessors (59), eine Differenz zwischen der Prüfantwort und der Kontrollantwort zu bestimmen, um eine Druckdifferenz zu bilden;
g. ein Ventil (31) in Fluidverbindung zwischen der Pumpe (50) und der Kontrollvorrichtung (49), **dadurch gekennzeichnet, dass** das Ventil einen Schaft (33) umfasst, der dazu konfiguriert ist, ein Volumen des Fluids in der Kontrollvorrichtung um ein bekanntes Volumen anzupassen; und dass das System weiter Folgendes umfasst:
h. Computeranweisungen in dem Datenspeicher (60) zum Anweisen des Prozessors (59), einen mit dem bekannten Volumen assoziierten Abfall der Druckdifferenz zu bestimmen;
i. Computeranweisungen in dem Datenspeicher (60) zum Anweisen des Prozessors (59), einen Leckprüfungsquotienten durch Teilen des bekannten Volumens durch den Abfall der Druckdifferenz zu bilden; und
j. Computeranweisungen in dem Datenspeicher (60) zum Anweisen des Prozessors (59), zu festzustellen, ob die Prüfantwort die Kontrollantwort nachahmt, durch Feststellen, ob eine Änderung der Druckdifferenz auftritt, wobei:
(i) wenn eine Nachahmung festgestellt wird, der Prozessor (59) dazu konfiguriert ist, Computeranweisungen in dem Datenspeicher (60) zu verwenden, um eine Feststellung bereitzustellen, dass kein Leck in der Fluiddichtung der Vorrichtung (48) vorliegt; oder
(ii) wenn keine Nachahmung festgestellt wird, der Prozessor (59) dazu konfiguriert ist, Computeranweisungen in dem Datenspeicher (60) zu verwenden, um ein Leckvolumen durch Multiplizieren eines mit der Änderung der Druckdifferenz assoziierten Druckabfalls mit dem Leckprüfungsverhältnis zu bestimmen und eine Feststellung bereitzustellen, dass ein Leck in der Fluiddichtung der Vorrichtung (48) vorliegt.

15. System nach Anspruch 14, weiter umfassend Computeranweisungen in dem Datenspeicher (60) zum Anweisen des Prozessors (59), eine mit dem Leckvolumen assoziierte Zeitperiode zu bestimmen und das Leckvolumen durch die Zeitperiode zu teilen, um eine Leckrate zu bilden.

## Revendications

1. Procédé de test d'un dispositif pour une détection de fuite de fluide, le procédé comprenant :
a. une connexion du dispositif (48) à une pompe (50) connectée à un réservoir (30) de fluide (34), dans lequel le dispositif présente un joint étanche ;
b. une connexion d'un dispositif de commande (49) à la pompe ;
c. un pompage simultané du fluide dans le dispositif (48) et le dispositif de commande (49) ;
d. une détection d'une pression du fluide s'écoulant vers le dispositif de commande (49), formant une réponse de commande ;
e. une détection d'une pression du fluide s'écoulant vers le dispositif (48), formant une réponse de test ;
f. une détermination d'une différence entre la réponse de test et la réponse de commande, formant une différence de pression, **caractérisé en ce que** le procédé comprend de plus les étapes consistant à
g. ajuster un volume du fluide dans le dispositif de commande (49) d'un volume connu ;
h. déterminer une chute de la différence de pression associée au volume connu ;
i. former un rapport de test d'étanchéité en divisant le volume connu par la chute de la différence de pression ; et
j. déterminer si la réponse de test imite la réponse de commande en déterminant si un changement de la différence de pression survient, dans lequel :
(i) si une imitation est déterminée, une fourniture d'une détermination du fait qu'aucune fuite dans le joint étanche du dispositif (48) n'est présente ; ou
(ii) si aucune imitation n'est déterminée, une détermination d'un volume de fuite en multipliant une chute de pression associée au changement de la différence de pression par le rapport de test d'étanchéité, et une fourniture d'une détermination du fait qu'une fuite dans le joint étanche du dispositif (48) est présente.

2. Procédé selon la revendication 1, comprenant en outre une détermination d'une période de temps associée au volume de fuite et une division du volume de fuite par la période de temps, formant un débit de fuite.

3. Procédé selon la revendication 1 ou 2, dans lequel le volume du fluide dans le dispositif de commande (49) est ajusté en utilisant une tige (33) d'une soupape (31), dans lequel la soupape est en communication fluidique entre la pompe (50) et le dispositif de commande, et dans lequel la tige est configurée pour être tournée pour fournir le volume connu.

4. Procédé selon l'une quelconque des revendications précédentes, comprenant en outre une détection des pressions en utilisant des transducteurs de pression (52, 54), dans lequel les transducteurs de pression sont en communication avec un processeur (59), dans lequel le processeur est en communication avec un stockage de données (60), et dans lequel le stockage de données présente des instructions informatiques pour un stockage des pressions détectées.

5. Procédé selon la revendication 4, comprenant en outre une utilisation d'instructions informatiques dans le stockage de données (60) pour :
a. former la réponse de test et la réponse de commande ;
b. former la différence de pression :
c. déterminer la chute de la différence de pression associée au volume connu ;
d. former le rapport de test d'étanchéité ;
e. déterminer si la réponse de test imite la réponse de commande ;
f. fournir la détermination du fait qu'aucune fuite dans le joint étanche du dispositif (48) n'est présente, ou déterminer le volume de fuite et fournir la détermination du fait que la fuite dans le joint étanche du dispositif est présente ;
g. stocker des informations concernant le fluide dans le stockage de données (60) ;
h. stocker une valeur pour le volume connu dans le stockage de données (60) ; et
i. stocker une valeur représentant le volume connu dans le stockage de données (60).

6. Procédé selon l'une quelconque des revendications précédentes, comprenant en outre une formation d'un graphique de la différence de pression dans le temps.

7. Procédé selon la revendication 6, comprenant en outre :
a. une utilisation d'un moyen (74) de communication pour transférer le graphique de la différence de pression dans le temps à un utilisateur, dans lequel le moyen de communication est en communication avec le processeur (59), le stockage de données (60), ou des combinaisons de ceux-ci ;
b. une présentation du graphique de la différence de pression dans le temps à titre de tableau de bord exécutif à l'utilisateur sur un dispositif client (70), un affichage (67), ou des combinaisons de ceux-ci ; ou
c. des combinaisons de ceux-ci.

8. Procédé selon l'une quelconque des revendications précédentes, dans lequel :
a. le fluide (34) est un élément du groupe constitué : d'eau, d'air comprimé, d'huile, d'azote comprimé, d'hélium comprimé, d'un autre gaz inerte comprimé, d'un autre gaz, d'un autre fluide, et de combinaisons de ceux-ci ;
b. le fluide est à une pression dans la plage de 96530 N/m² (14 psi) à 2,758 x 10⁸ N/m² (40 000 psi) ;
c. le fluide est pompé vers le dispositif (48) et le dispositif de commande (49) à une pression dans la plage de 3,448 x 10⁷ N/m² (5000 psi) à 1,379 x 10⁸ N/m² (20 000 psi) ou
d. des combinaisons de ceux-ci.

9. Procédé selon l'une quelconque des revendications précédentes, comprenant en outre une fourniture de pressions identiques au dispositif (48) et au dispositif de commande (49) en utilisant le fluide.

10. Procédé selon l'une quelconque des revendications précédentes, dans lequel le dispositif (48) est un obturateur anti-éruption, un connecteur, ou une pluralité de connecteurs pour un puits.

11. Procédé selon l'une quelconque des revendications précédentes, dans lequel la fuite de fluide présente un débit inférieur à 1 x 10⁻⁶ cm³ par minute.

12. Procédé selon l'une quelconque des revendications précédentes, dans lequel le volume connu est dans la plage de 3,786 x 10⁻⁶ l (1 x 10⁻⁶ gallons) à 159 l (1 baril).

13. Procédé selon l'une quelconque des revendications précédentes, comprenant en outre un empilement ou une connexion de multiples dispositifs ensemble et simultanément de joints étanches des multiples dispositifs.

14. Système de test d'un dispositif pour une détection d'une fuite de fluide, le système comprenant :
a. une pompe (50) connectée à un réservoir (30) de fluide (34), dans lequel la pompe est configurée pour être connectée à un dispositif (48) présentant un joint étanche ;
b. dispositif de commande (49) en communication fluidique avec la pompe, dans lequel la pompe est configurée pour pomper simultanément le fluide dans le dispositif (48) et le dispositif de commande (49) ;
c. un premier transducteur de pression (54) disposé entre la pompe (50) et le dispositif de commande (49) pour une détection d'une pression du fluide dans le dispositif de commande pour former une réponse de commande ;
d. un second transducteur de pression (52) disposé entre la pompe (50) et le dispositif (48) pour une détection d'une pression du fluide dans le dispositif pour former une réponse de test ;
e. un processeur (59) et un stockage de données (60) en communication avec le premier transducteur de pression (54) et le second transducteur de pression (52), dans lequel le processeur et configuré pour recevoir la réponse de commande et la réponse de test pour un stockage dans le stockage de données ;
f. des instructions informatiques dans le stockage de données (60) pour ordonner au processeur (59) de déterminer une différence entre la réponse de test et la réponse de commande pour former une différence de pression ;
g. une soupape (31) en communication fluidique entre la pompe (50) et le dispositif de commande (49), **caractérisé en ce que**,
la soupape comprend une tige (33) configurée pour ajuster un volume du fluide dans le dispositif de commande d'un volume connu ; et **en ce que** le système comprend en outre
h. des instructions informatiques dans le stockage de données (60) pour ordonner au processeur (59) de déterminer une chute de la différence de pression associée au volume connu ;
i. des instructions informatiques dans le stockage de données (60) pour ordonner au processeur (59) de former un rapport de test d'étanchéité en divisant le volume connu par la chute de la différence de pression ; et
j. des instructions informatiques dans le stockage de données (60) pour ordonner au processeur (59) de déterminer si la réponse de test imite la réponse de commande en déterminant si un changement de la différence de pression survient, dans lequel :
(i) si une imitation est déterminée, le processeur (59) est configuré pour utiliser des instructions informatiques dans le stockage de données (60) pour fournir une détermination du fait qu'aucune fuite dans le joint étanche du dispositif (48) n'est présente ; ou
(ii) si une imitation n'est pas déterminée, le processeur (59) est configuré pour utiliser des instructions informatiques dans le stockage de données (60) pour déterminer un volume de fuite en multipliant une chute de pression associée au changement de la différence de pression par le rapport de test d'étanchéité, et pour fournir une détermination du fait qu'une fuite dans le joint étanche du dispositif (48) est présente.

15. Système selon la revendication 14, comprenant en outre des instructions informatiques dans le stockage de données (60) pour ordonner au processeur (59) de déterminer une période de temps associée au volume de fuite et une division du volume de fuite par la période de temps pour former un débit de fuite.
